(19) Europäisches Patentamt
European Patent Office
Office européen des brevets

(11) Publication number: **0 226 463 B2**

(12) **NEW EUROPEAN PATENT SPECIFICATION**

(45) Date of publication of the new patent specification: **07.09.94**

(51) Int. Cl.5: **C08F 10/00**, C08F 4/64

(21) Application number: **86309683.0**

(22) Date of filing: **11.12.86**

# (54) Polymerization catalyst.

(30) Priority: **12.12.85 US 808419**

(43) Date of publication of application: **24.06.87 Bulletin 87/26**

(45) Publication of the grant of the patent: **03.10.90 Bulletin 90/40**

(45) Mention of the opposition decision: **07.09.94 Bulletin 94/36**

(84) Designated Contracting States: **AT BE CH DE ES FR GB IT LI LU NL SE**

(56) References cited:
**EP-A- 129 368**
**EP-A- 0 128 046**

**Polymerisationsverhalten von löslichen, ringsubstituierten Zirkonocen (IV) dichloriden und Methylaluminoxan sowie anderen Cokatalysatoren gegenüber 1-Olefinen, Thesis, Hamburg University, dated 22.09.85, by K. Külper**

(73) Proprietor: **EXXON CHEMICAL PATENTS INC.**
**1900 East Linden Avenue**
**Linden, New Jersey 07036-0710 (US)**

(72) Inventor: **Turner, Howard William**
**303 Elder Glen**
**Webster, TX 77598 (US)**

(74) Representative: **Dew, Melvyn John et al**
**Exxon Chemical Limited**
**Exxon Chemical Technology Centre**
**P.O. Box 1**
**Abingdon Oxfordshire, OX13 6BB (GB)**

EP 0 226 463 B2

## Description

This invention relates to a new catalyst useful for the polymerization and copolymerization of olefins and particularly useful for the polymerization of ethylene and copolymerization of ethylene with 1-olefins having 3 or more carbon atoms such as, for example, propylene, i-butene, 1-butene, 1-pentene, 1-hexene, and 1-octene; dienes such as butadiene, 1,7-octadiene, and 1,4-hexadiene or cyclic olefins such as norbornene. The olefin polymerization catalyst may be used without the use of an organometallic cocatalyst. The invention further generally relates to the method of preparing the new catalyst and to a process for polymerization of ethylene alone or with other 1-olefins or diolefins in the presence of the new catalyst.

EP-A-0 128 046 describes a polymerisation process in which alumoxane was injected separately from metallocenes into a toluene containing vessel subsequently pressurised with propylene and ethylene. A large excess of alumoxane was used to aid polymerisation. This document does not disclose a reaction product of alumoxane and a metallocene with a much lower aluminum content as an effective catalyst.

Homogeneous catalyst systems of the kind disclosed by EP-A-0 128 046 suffer from a disadvantage, that is, the ratio of alumoxane to metallocene practically necessary is high, for example in the order of 1,000 to 1 up to as high as $10^6$:1. Such voluminous amounts of alumoxane would require extensive treatment of obtained polymer product in order to remove the undesirable aluminum. A second disadvantage of such homogeneous catalyst system, is the multiple of delivery systems required for introducing the individual catalyst components into the polymerization reactor. A third disadvantage is the high costs of the alumoxane. A thesis by Dr Kuelper from Hamburg University from 1985 discloses solid reaction products obtained by condensation reactions with gas development after prolongs reactions at temperatures at or above ambient.

In accordance with the present invention, a new composition of matter comprising a metallocene-alumoxane reaction product is provided which is useful as a catalyst for olefin polymerization and particularly useful for the production of low, medium and high density polyethylenes and copolymers of ethylene with alphaolefins having 3 to 18 or more carbon atoms and/or diolefins having up to 18 carbon atoms or more.

In accordance with one embodiment of this invention there is provided a solid catalyst for use in a subsequent polymerization step comprising a reaction product obtainable by contacting at least one metallocene of a transition metal of Group IVB, VB, VIB, and VIII of the Periodic Table (66th Edition of Handbook of Chemistry and Physics, CRC press (1985-86) CAS version) and an alkylalumoxane at a temperature between -78 °C and 50 °C for 2 to 60 minutes, said reaction product having molar ratio of an aluminium to transition metal from 12:1 to 100:1.

In accordance with another embodiment of this invention, in polymerization the reaction product can be usefully employed as the sole catalyst component in an olefin polymerization process.

The reaction product will polymerize olefins at commercially respectable rates without the presence of the objectionable excess of alumoxane as required in the homogeneous system.

In yet another embodiment of this invention there is provided a process for the polymerization of ethylene and other olefins, and particularly homopolymers of ethylene and copolymers of ethylene and higher alpha-olefins and/or diolefins and/or cyclic olefins such as norbornene in the presence of the new catalysts.

The metallocenes employed in the production of the reaction product are organometallic compounds which are cyclopentadienyl derivatives of a Group IVB. VB, VIB or VIII metal of the Periodic Table (66th Edition of Handbook of Chemistry and Physics, CRC Press (1985-86) CAS version) and include mono, di and tricyclopentadienyls and their derivatives of the transition metals. Particularly desirable are metallocene complexes of a Group IVB and VB metals such as titanium, zirconium, hafnium and vanadium. The alumoxanes employed in forming the reaction product with the metallocene are themselves the reaction products of an aluminum trialkyl with water.

The alumoxanes are well known in the art and comprise oligomeric linear and/or cyclic alkyl alumoxanes represented by the formula:

(I) $R-(\underset{\substack{|\\R}}{Al}-O)_n-AlR_2$ for oligomeric linear alumoxanes and

(II) $(-\underset{\substack{|\\R}}{Al}-O-)_m$ for oligomeric, cyclic alumoxane,

wherein n is 1-40, preferably 10-20, m is 3-40, preferably 3-20 and R is a $C_1$-$C_8$ alkyl group and preferably methyl. Generally, in the preparation of alumoxanes from, for example, aluminum trimethyl and water, a mixture of linear and cyclic compounds is obtained.

The alumoxanes can be prepared in a variety of ways. Preferably, they are prepared by contacting water with a solution of aluminum trialkyl, such as, for example, aluminum trimethyl, in a suitable organic solvent such as benzene or an aliphatic hydrocarbon. For example, the aluminum alkyl is treated with water in the form of a moist solvent. In a preferred method, the aluminum alkyl, such as aluminum trimethyl, can be desirably contacted with a hydrated salt such as hydrated ferrous sulfate. The method comprises treating a dilute solution of aluminum trimethyl in, for example, toluene with ferrous sulfate heptahydrate.

Preferred embodiments

The catalyst may be employed in combination with other catalyst systems such as, for example, titanium halide-aluminum alkyl catalyst system.

The normally hydrocarbon soluble metallocenes and alumoxanes are converted to a relatively hydrocarbon insoluble solid reaction product by contacting said metallocenes and alumoxanes in a suitable solvent. The order of addition in contacting the metallocene and alumoxane can vary. For example, the metallocene (neat or dissolved in a suitable solvent) can be first added to the reaction vessel followed by the addition thereto of the alumoxane; the alumoxane and metallocene can be added to the reaction vessel simultaneously; the alumoxane can be first added to the reaction vessel followed by the addition of the metallocene. In accordance with the preferred embodiment of this invention the metallocene dissolved in a suitable inert hydrocarbon solvent is added to a stirred solution of the alumoxane.

The preparation of the metallocene-alumoxane reaction product, as mentioned above, is conducted in an inert solvent, preferably a hydrocarbon solvent in which the metallocene and alumoxane are soluble. Preferred solvents include mineral oils and the various hydrocarbons which are liquid at reaction temperatures and in which the individual ingredients are soluble. Illustrative examples of useful solvents include the alkanes such as pentane, iso-pentane, hexane, heptane, octane or nonane; cycloalkanes such as cyclopentane or cyclohexane; and aromatics such as benzene, toluene, ethylbenzene or diethylbenzene,

The solid catalyst prepared in accordance with this invention is generally sparingly soluble at ambient temperatures in aromatic solvents, insoluble in aliphatic solvents and decomposes in polar solvents.

Preferably, the metallocene is dissolved in a hydrocarbon in which the reaction product of the alumoxane and metallocene is largely insoluble such as pentane. The amount of solvent to be employed can vary over a wide range without a deletereous effect of the reaction. In accordance with the preferred embodiment of this invention, the amount of solvent to be employed is enough to completely dissolve the metallocene and alumoxane independently prior to addition.

The metallocene and alumoxane can be added to the reaction vessel rapidly or slowly. The temperature maintained during the contact of the reactants is, from -78°C to 50°C. Preferably, the alumoxanes and metallocenes are contacted at 0°C temperature. The reaction between the alumoxane and the metallocene is rapid, and hence the reaction between the alumoxane and the metallocene is maintained for 2 to 60 minutes. Preferably, the reaction is maintained for 15 minutes at subambient temperatures. The reaction of the alumoxane and the metallocene is evidenced by the color change and formation of a precipitate or oil.

At all times, the individual ingredients as well as the recovered catalyst are protected from oxygen and moisture. Therefore, the reactions must be performed in an oxygen and moisture free atmosphere and recovered in an oxygen and moisture free atmosphere. Preferably, therefore, the reaction is performed in the presence of an inert dry gas such as, for example, helium or nitrogen. The recovered solid catalyst can be maintained in a nitrogen atmosphere, preferably a subambient temperature.

The reaction products of the metallocene and alumoxane which are generally solid materials when produced in aliphatic solvents and oils when produced in aromatic solvents can be recovered by any well-known technique. For example, the solid material can be recovered from the liquid by vacuum filtration or decantation. The oils can be recovered by decantation, and when dried, became glassy solids. The recovered material is thereafter dried under a stream of pure dry nitrogen, dried under vacuum, or by any other convenient manner. The recovered solid is a catalytically active material.

The solid can be usefully employed in gas phase polymerization, slurry polymerization, or in solution polymerization.

The amount of alumoxane and metallocene usefully employed in preparation of the solid catalyst component can vary over a wide range. To obtain a stable solid the mole ratio of alumoxane to metallocene is from 12:1 to 100:1. Ratios in the range of 20-40:1 are desirable. The solid obtained will have an aluminum to transition metal ratio in the range of 12 to 100 moles of aluminum per mole of metal and preferably 12 to

30 moles of aluminum per mole of metal. The solid so obtained has excellent catalytic activity with respect to olefin polymerization while employing significantly lower ratios of aluminum to transition metal as compared to the homogeneous systems, whereby polymerization is carried out by adding the alumoxane and metallocene independently to the reactor.

The present invention employs at least one metallocene compound in the formation of the solid catalyst. Metallocene, i.e. a cyclopentadienylide, is a metal derivative of a cyclopentadiene. The metallocenes usefully employed in accordance with this invention contain at least one cyclopentadiene ring. The metal is selected from Group IVB, VB, VIB, and VIII metal, preferably IVB and VB metal, preferably titanium, zirconium, hafnium, chromium, and vanadium, and especially titanium and zirconium. The cyclopentadienyl ring can be unsubstituted or contain substituents such as, for example, a hydrocarbyl substituent. The metallocene can contain one, two, or three cyclopentadienyl rings however two rings are preferred.

The preferred metallocenes can be represented by the general formulas:

I. $(Cp)_mMR_nX_q$

wherein Cp is a cyclopentadienyl ring, M is a Group IVB, VB, VIB, or VIII transition metal, R is a hydrogen or a hydrocarbyl group or hydrocarboxy having from 1 to 20 carbon atoms, X is a halogen, and m = 1-3, n = 0-3, q = 0-3 and the sum of m + n + q is equal to the oxidation state of the metal. The metal is most preferably in its highest formal oxidation state.

II. $(C_5R'_k)_gR''_s(C_5R'_k)MQ_{3-g}$

and

III. $R''_s(C_5R'_k)_2MQ'$

wherein $(C_5R'_k)$ is a cyclopentadienyl or substituted cyclopentadienyl, each R' is the same or different and is hydrogen or a hydrocarbyl radical such as alkyl, alkenyl, aryl, alkaryl, or arylalkyl radical containing from 1 to 20 carbon atoms or two carbon atoms are joined together to form a $C_4$-$C_6$ ring, R'' is a $C_1$-$C_4$ alkylene radical, a dialkyl germanium or silicon, or an alkyl phosphine or amine radical bridging two $(C_5R'_k)$ rings, Q is a hydrocarbyl radical such as aryl, alkyl, alkenyl, alkylaryl, or aryl alkyl radical having from 1-20 carbon atoms, hydrocarboxy radical having from 1-20 carbon atoms or halogen and can be the same or different from each other, Q' is an alkylidiene radical having from 1 to about 20 carbon atoms, s is 0 or 1, g is 0,1 or 2, s is 0 when g is 0, k is 4 when s is 1 and k is 5 when s is 0, and M is as defined above.

Exemplary hydrocarbyl radicals are methyl, ethyl, propyl, butyl, amyl, isoamyl, hexyl, isobutyl, heptyl, octyl, nonyl, decyl, cetyl, 2-ethylhexyl or phenyl.

Exemplary halogen atoms include chlorine, bromine, fluorine and iodine and of these halogen atoms, chlorine is preferred.

Exemplary hydrocarboxy radicals are methoxy, ethoxy, propoxy, butoxy or amyloxy.

Exemplary of the alkylidiene radicals is methylidene, ethylidene and propylidene.

Illustrative, but non-limiting examples of the metallocenes represented by formula I are dialkyl metallocenes such as bis(cyclopentadienyl)titanium dimethyl, bis(cyclopentadienyl)titanium diphenyl, bis-(cyclopentadienyl)zirconium dimethyl, bis(cyclopentadienyl)zirconium diphenyl, bis(cyclopentadienyl)-hafnium dimethyl and diphenyl, bis(cyclopentadienyl)titanium di-neopentyl, bis(cyclopentadienyl)zirconium di-neopentyl, bis(cyclopentadienyl)titanium dibenzyl, bis(cyclopentadienyl)zirconium dibenzyl, bis-(cyclopentadienyl)vanadium dimethyl; the mono alkyl metallocenes such as bis(cyclopentadienyl)titanium methyl chloride, bis(cyclopentadienyl)titanium ethyl chloride, bis(cyclopentadienyl)titanium phenyl chloride, bis(cyclopentadienyl)zirconium methyl chloride, bis(cyclopentadienyl)zirconium ethyl chloride, bis-(cyclopentadienyl)zirconium phenyl chloride, bis(cyclopentadienyl)titanium methyl bromide, bis-(cyclopentadienyl)methyl iodide, bis(cyclopentadienyl)titanium ethyl bromide, bis(cyclopentadienyl)titanium ethyl iodide, bis(cyclopentadienyl)titanium phenyl bromide, bis(cyclopentadienyl)titanium phenyl iodide, bis-(cyclopentadienyl)zirconium methyl bromide, bis(cyclopentadienyl)zirconium methyl iodide, bis-(cyclopentadienyl)zirconium ethyl bromide, bis(cyclopentadienyl)zirconium ethyl iodide, bis-(cyclopentadienyl)zirconium phenyl bromide, bis(cyclopentadienyl)zirconium phenyl iodide; the trialkyl metallocenes such as cyclopentadienyltitanium trimethyl, cyclopentadienyl zirconium triphenyl, and cyclopentadienyl zirconium trineopentyl, cyclopentadienylzirconium trimethyl, cyclopentadienylhafnium triphenyl, cyclopentadienylhafnium trineopentyl, and cyclopentadienylhafnium trimethyl.

Illustrative, but non-limiting examples of II and III metallocenes which can be usefully employed in accordance with this invention are monocyclopentadienyls titanocenes such as, pentamethylcyclopentadienyl titanium trichloride, pentaethylcyclopentadienyl titanium trichloride; bis-(pentamethylcyclopentadienyl) titanium diphenyl, the carbene represented by the formula bis-(cyclopentadienyl)titanium = $CH_2$ and derivatives of this reagent such as bis(cyclopentadienyl)Ti = $CH_2$ • $Al(CH_3)_3$, $(Cp_2TiCH_2)_2$,$Cp_2TiCH_2CH(CH_3)CH_2$, $Cp_2Ti\text{-}CHCH_2CH_2$; substituted bis(cyclopentadienyl)titanium (IV) compounds such as: bis(indenyl)titanium diphenyl or dichloride, bis(methylcyclopentadienyl)titanium diphenyl or dihalides; dialkyl, trialkyl, tetra-alkyl and penta-alkyl cyclcopentadienyl titanium compounds such as bis(1,2-dimethylcyclopentadienyl)titanium diphenyl or dichloride, bis(1,2-diethylcyclopentadienyl)titanium diphenyl or dichloride and other dihalide complexes; silicon, phosphine, amine or carbon bridged cyclopentadiene complexes, such as dimethyl silyldicyclopentadienyl titanium diphenyl or dichloride, methyl phosphine dicyclopentadienyl titanium diphenyl or dichloride, methylenedicyclopentadienyl titanium diphenyl or dichloride and other dihalide complexes.

Illustrative but non-limiting examples of the zirconocenes Formula II and III which can be usefully employed in accordance with this invention are, pentamethylcyclopentadienyl zirconium trichloride, pentaethylcyclopentadienyl zirconium trichloride, bis(pentamethylcyclopentadienyl)zirconium diphenyl, the alkyl substituted cyclopentadienes, such as bis(ethyl cyclopentadienyl)zirconium dimethyl, bis($\beta$-phenylpropylcyclopentadienyl)zirconium dimethyl, bis(methylcyclopentadienyl)zirconium dimethyl, bis(n-butylcyclopentadienyl)zirconium dimethyl, bis(cyclohexylmethylcyclopentadienyl)zirconium dimethyl, bis(n-octyl-cyclopentadienyl)zirconium dimethyl, and haloalkyl and dihalide complexes of the above; di-alkyl, trialkyl, tetra-alkyl, and penta-alkyl cyclopentadienes, such as bis(pentamethylcyclopentadienyl)zirconium di-methyl, bis(1,2-dimethylcyclopentadienyl)zirconium dimethyl and dihalide complexes of the above; silicone, phosphorus, and carbon bridged cyclopentadiene complexes such as dimethylsilyldicyclopentadienyl zirconium dimethyl or dihalide, and methylene dicyclopentadienyl zirconium dimethyl or dihalide, and methylene dicyclopentadienyl zirconium dimethyl or dihalide, carbenes represented by the formula

$Cp_2Zr = CHP(C_6H_5)_2CH_3$,

and derivatives of these compounds such as

$Cp_2ZrCH_2CH(CH_3)CH_2$.

Bis(cyclopentadienyl)hafnium dichloride, bis(cyclopentadienyl)hafnium dimethyl, bis(cyclopentadienyl)-vanadium dichloride and the like are illustrative of other metallocenes.

The polymerization may be conducted by a solution, slurry, or gas-phase technique, generally at a temperature in the range of 0°-160°C or even higher, and under atmospheric, subatmospheric, or superatmospheric pressure conditions; and conventional polymerization adjuvants, such as hydrogen may be employed if desired. It is generally preferred to use the catalyst compositions at a concentration such as to provide about 0.00005-0.01%, most preferably about 0.005-0.001%, by weight of transition metal (100 g metal $g^{-1}$ diluent).

A slurry polymerization can utilize sub- or super-atmospheric pressures and temperatures in the range of 40-110°C. In a slurry polymerization, a suspension of solid, particulate polymer is formed in a liquid polymerization medium to which ethylene, alpha-olefin comonomer, hydrogen and catalyst are added. The liquid employed as the polymerization medium can be an alkane or cycloalkane, such as butane, pentane, hexane, or cyclohexane, or an aromatic hydrocarbon, such as toluene, ethylbenzene or xylene. The medium employed should be liquid under the conditions of the polymerization and relatively inert. Preferably, hexane or toluene is employed.

In a slurry phase polymerization, the alkyl aluminum scavenger is preferably dissolved in a suitable solvent, typically in an inert hydrocarbon solvent such as toluene, xylene, and the like in a molar concentration of about $1 \times 10^{-3}$M. However, greater or lesser amounts can be used.

A gas-phase polymerization process utilizes superatmospheric pressure and temperatures in the range of 50°-120°C. Gas-phase polymerization can be performed in a stirred or fluidized bed of catalyst and product particles in a pressure vessel adapted to permit the separation of product particles from unreacted gases. Thermostated ethylene, comonomer, hydrogen and an inert diluent gas such as nitrogen can be introduced or recirculated so as to maintain the particles at a temperature of 50°-120°C. Trimethylaluminum may be added as needed as a scavenger of water, oxygen, and other adventitious impurities. Polymer product can be withdrawn continuously or semi-continuing at a rate such as to maintain a constant product inventory in the reactor. After polymerization and deactivation of the catalyst, the product

polymer can be recovered by any suitable means. In commercial practice, the polymer product can be recovered directly from the gas phase reactor, freed of residual monomer with a nitrogen purge, and used without further deactivation or catalyst removal. The polymer obtained can be extruded into water and cut into pellets or other suitable comminuted shapes. Pigments, antioxidants and other additives, as is known in the art, may be added to the polymer.

The molecular weight of polymer product obtained in accordance with this invention can vary over a wide range, such as low as 500 up to 2,000,000 or higher and preferably 1,000 to about 500,000.

For the production of polymer product having a narrow molecular weight distribution, it is preferable to employ only one metallocene in forming the solid catalyst with the alumoxane. For broader molecular weight distribution or broad compositional distribution polymer one employs two or more metallocenes in forming the solid catalyst.

It is highly desirable to have for many applications, such as extrusion and molding processes, polyethylenes which have a broad molecular weight distribution of the unimodal and/or the multimodal type. Such polyethylenes evidence excellent processability, i.e. they can be processed at a faster throughput rate with lower energy requirements and at the same time such polymers would evidence reduced melt flow perturbations. Such polyethylenes can be obtained by providing a catalyst component comprising at least two different metallocenes, each having different propagation and termination rate constants for ethylene polymerizations. Such rate constants are readily determined by one of ordinary skill in the art,

The molar ratio of the metallocenes, such as for example, of a zirconocene to a titanocene in such catalysts, can vary over a wide range, and in accordance with this invention, the only limitation on the molar ratios is the breadth of the Mw distribution or the degree of bimodality desired in the product polymer. Desirably, the metallocene to metallocene molar ratio will be 1:1 to 100:1, and preferably 1:1 to 10:1.

The present invention also provides a process for producing (co)polyolefin reactor blends comprising polyethylene and copolyethylene-alpha-olefins. The reactor blends are obtained directly during a single polymerization process, i.e., the blends of this invention are obtained in a single reactor by simultaneously polymerizing ethylene and copolymerizing ethylene with an alpha-olefin thereby eliminating expensive blending operations. The process of producing reactor blends in accordance with this invention can be employed in conjunction with other prior art blending techniques, for example, the reactor blends produced in a first reactor can be subjected to further blending in a second stage by use of the series reactors.

In order to produce reactor blends the catalyst comprises at least two different metallocenes each having different comonomer reactivity ratios.

The comonomer reactivity ratios of the metallocenes in general are obtained by well known methods, such as for example, as described in "Linear Method for Determining Monomer Reactivity Ratios in Copolymerization", M. Fineman and S. D. Ross, J. Polymer Science *5*, 259 (1950) or "Copolymerization", F. R. Mayo and C. Walling, Chem, Rev. 46, 191 (1950). For example, to determine reactivity ratios the most widely used copolymerization model is based on the following equations:

$$M_1^* + M_1 \underline{k_{11} M_1^*} \quad (1)$$

$$M_1^* + M_2 \underline{k_{12} M_2^*} \quad (2)$$

$$M_2^* + M_1 \underline{k_{21} M_1^*} \quad (3)$$

$$M_2^* + M_2 \underline{k_{22} M_2^*} \quad (4)$$

where $M_1$ refers to a monomer molecule which is arbitrarily designated i (where i = 1, 2) and $M_i^*$ refers to a growing polymer chain to which monomer i has most recently attached.

The kij values are the rate constants for the indicated reactions. In this case, $k_{11}$ represents the rate at which an ethylene unit inserts into a growing polymer chain in which the previously inserted monomer unit was also ethylene. The reactivity rates follow as:

$r_1 = k_{11}/k_{12}$ and $r_2 = k_{22}/k_{21}$

wherein $k_{11}$, $k_{12}$, $k_{22}$ and $k_{21}$ are the rate constants for ethylene (1) or comonomer (2) addition to a catalyst site where the last polymerized monomer is ethylene ($k_{1X}$) or comonomer (2) ($k_{2X}$).

Since, in accordance with this invention, one can produce high viscosity polymer product at a relatively high temperature, temperature does not constitute a limiting parameter as with the prior art metallocene/alumoxane catalyst. The catalyst systems described herein, therefore, are suitable for the polymerization of olefins in solution, slurry or gas phase polymerizations and over a wide range of temperatures and pressures, For example, such temperatures may be in the range of -60 °C to 280 °C and especially in the range of 0 °C to 160 °C. The pressures employed in the process of the present invention are those well known, for example, in the range of 1 to 500 atmospheres, however, higher pressures can be employed.

The polymers produced by the process of this present invention are capable of being fabricated into a wide variety of articles, as is known for homopolymers of ethylene and copolymers of ethylene and higher alpha-olefins. The present invention is illustrated by the following examples.

Examples

In the Examples following the elemental analysis was obtained through inductively coupled plasma emission spectroscopy on a Jarrell Ash Spectrometer Model 750 manufactured by Jarrell Ash.

Bis(pentamethylcyclopentadienyl)zirconium bis-triflate was manufactured by dissolving 2 grams of bis-(pentamethylcyclopentadienyl)zirconium dimethyl in 100 ml of toluene and cooling to -30 °C. To the cooled solution was added 1.53 grams of triflic acid ($CF_3SO_3H$). The reaction was stirred for one hour and the solid was isolated by filtration. The crude product was recrystallized from dichloromethane and diethyl ether yielding 2.8 grams of yellow prisms characterized by NMR spectroscopy (Varian XL200) to be bis-pentamethylcyclopentadienyl-zirconium-bis-triflate. 1.0 grams of the recovered complex was suspended in 50 ml of toluene under constant stirring to which was added 0.11 g of trimethylaluminum. The solid reaction product began immediately to dissolve. Reaction was continued for 30 minutes, upon which the solvent was removed *in vacuo*. The recovered product was recrystallized from toluene-pentane to yield 0.80 grams of yellow crystals characterized by proton and carbon NMR spectroscopy (Varian XL200) to be bis-pentamethylcyclopentadienyl-zirconium-methyl-triflate.

The alumoxane employed was prepared by adding 76.5 grams ferrous sulfate heptahydrate in 4 equally spaced increments over a 2 hour period to a rapidly stirred 2 liter round-bottom flask containing 1 liter of a 13,1 wt.% solution of trimethylaluminum (TMA) in toluene. The flask was maintained at 50 °C and under a nitrogen atmosphere. Methane produced was continuously vented. Upon completion of the addition of ferrous sulfate heptahydrate the flask was continuously stirred and maintained at a temperature of 50 °C for 6 hours. The reaction mixture was cooled to room temperature and was allowed to settle. The clear solution containing the alumoxane was separated by decantation from the insoluble solids.

In cases where the metallocene of interest is readily soluble in a saturated hydrocarbon such as pentane, it is desirable to have the methylalumoxane dissolved in that same solvent. Pentane solutions of alumoxane are prepared by concentrating a toluene solution of alumoxane (prepared as above) *in vacuo* to a clear viscous oil (i.e., where most of the toluene has been removed but prior to the point where a solid glass is formed). This oil is extracted with pentane to remove all pentane soluble aluminum components. The pentane solubles are separated from high molecular weight insoluble alumoxane oligomers by filtration, and analyzed for aluminum concentration by ICPES.

Example 1

Catalyst preparation

To a 0.5 liter reaction flask containing 1 gram of bis(pentamethylcyclopentadienyl)zirconium dichloride dissolved in 75 ml of toluene, there was added with constant stirring and at room temperature, 198 ml of a pentane solution 0.35 M in methylalumoxane. A reaction occurred immediately as evidenced by the formation of an insoluble yellow-oil. The reaction flask was cooled to -30 °C and held at that temperature for one hour, The oil was separated from the mother liquor by decantation, washed with 30 ml of pentane and dried *in vacuo* yielding 1.47 grams of a glassy solid (Solid I). The aluminum:zirconium ratio was 33:1.

Polymerization

Solid 1 (0.05 g) was dissolved in 100 ml of toluene, injected into a 250 ml pressure reaction vessel and heated to 80 °C. The vessel was pressured to 2.4 bar (35 psi) with ethylene and maintained for 20 minutes at 80 °C with constant stirring. 4,4 grams of high-density polyethylene was isolated.

Example 2

Catalyst preparation

To a .25 liter reaction flask containing 0.75 grams of bis(pentamethylcyclopentadienyl)zirconium dimethyl dissolved in 50 ml of toluene, there was added with constant stirring and at room temperature, 164 ml of a pentane solution 0.35 M in methylalumoxane. A reaction occurred immediately, yielding a yellow oil. The reaction flask was cooled to -30 ° C and held at that temperature for one hour. The oil was separated from the other liquor, washed with 50 ml of pentane, and dried *in vacuo*, yielding 1.3 grams of a glassy solid (Solid II). The aluminum:zirconium ratio was 32:1.

Polymerization

Solid II (0.05 g) was dissolved in 100 ml toluene, injected into a 250 ml pressure reaction vessel and heated to 80 ° C. The vessel was pressured to 2.4 bar (35 psi) with ethylene and maintained for 20 minutes at 80 ° C with constant stirring. 5.4 grams of high density polyethylene was recovered.

Example 3

Catalyst preparation

To a .25 liter reaction flask containing 1 gram of bis(n-butylcyclopentadienyl)zirconium dichloride dissolved in 75 ml of a 20:80 mixture of toluene and pentane, there was added with constant stirring, and at room temperature, 176 ml of methylalumoxane (0.35M). The reaction vessel was cooled to -30 ° C and held at the temperature for one hour. The oil was separated from the mother liquor by decantation, washed with 20 ml of pentane, and dried *in vacuo* yielding 1.87 grams of a glassy solid (Solid III). The aluminum:zirconium ratio was 20:1.

Polymerization

Solid III (0.05 g) was dissolved in 100 ml toluene, injected into a 250 ml reaction vessel and heated to 80 ° C. The vessel was pressured to 2.4 bar (35 psi) with ethylene and maintained for 10 minutes at 80 ° C with constant stirring. 8.2 grams of high density polyethylene was isolated.

Example 4

Catalyst preparation

To a .25 liter reaction flask containing 0.50 grams of bis(cyclopentadienyl)titanium methyl chloride dissolved in 75 ml of toluene, there was added with constant stirring and at room temperature, 156 ml of a pentane solution 0.35 M in methylalumoxane. A chemical reaction occurred as evidenced by the immediate formation of a deep red oil. The reaction vessel was cooled to -30 ° C and held at that temperature for a one hour period. The oil was separated from the mother liquor by decantation, washed with 50 ml pentane, and dried *in vacuo*, yielding 2.78 grams of a glassy solid (Solid IV). The aluminum:titanium ratio was 20:1.

Polymerization

Solid IV (0.05 g) was dissolved in 100 ml toluene, injected into a 250 ml pressure reaction vessel and heated to 80 ° C. The vessel was pressured to 2.4 bar (35 psi) with ethylene and maintained for 20 minutes at 80 ° C with constant stirring. 3.8 grams of high density polyethylene was isolated.

Example 5

Catalyst preparation

To a 0.25 liter reaction flask containing 0.71 grams of bis(pentamethylcyclopentadienyl)-zirconiummethyl-triflate dissolved in 100 ml of toluene, there was added, with constant stirring and at room temperature, 97 ml of a pentane solution 0.35 M of methylalumoxane. A reaction occurred immediately as

evidenced by the formation of an insoluble yellow oil. The reaction vessel was cooled to -30°C and held at that temperature for one hour. The oil was separated from the mother liquor by decantation, washed in 50 ml of pentane and dried *in vacuo*, yielding 1.80 grams of a glassy solid (Solid V). The aluminum:zirconium ratio was 68:1.

Polymerization

Solid V (0.05 g) was dissolved in 100 ml of toluene, injected into a 250 ml pressure reaction vessel and heated to 80°C. The vessel was pressured to 2.4 bar (35 psi) with ethylene was maintained for 20 minutes at 80°C and with constant stirring. 3.2 grams of polyethylene was isolated.

Example 6

Catalyst preparation

To a 0.25 liter reaction flask containing 1 gram of bis(pentamethylcyclopentadienyl)titanium dichloride dissolved in 60 ml of toluene there was added, with constant stirring and at room temperature, 80 ml of a pentane solution 0.79 M in methylalumoxane. A reaction occurred immediately as evidenced by the formation of a sparingly soluble deep red oil. The reaction vessel was cooled to -30°C and held at that temperature for one hour. The oil was separated from the mother liquor, washed in 50 ml of pentane and dried *in vacuo*, yielding 1.95 grams of a glassy solid (Solid VI). The aluminum:titanium ratio was 17:1.

Polymerization

Solid VI (0.05 g) was dissolved in 100 ml of toluene, injected into a 250 ml pressure reaction vessel and heated to 80°C. The vessel was pressured to 2.4 bar (35 psi) with ethylene and maintained for 20 minutes at 80°C with constant stirring. 0.9 gram of polyethylene was isolated.

Example 7

Catalyst preparation

To a .25 liter reaction flask containing 0.75 grams of bis(n-butylcyclopentadienyl)titanium dichloride dissolved in 100 ml of an 80:20 mixture of pentane and toluene there was added, with constant stirring and at room temperature, 66 ml of a pentane solution 0.35 M in methylalumoxane. A reaction occurred immediately as evidenced by the formation of an insoluble red oil. The reaction vessel was cooled to -30°C and held at that temperature for one hour. The oil was separated from the mother liquor, washed in 50 ml of pentane and dried *in vacuo*, yielding 0.75 grams of a glassy solid (Solid VII). The aluminum:titanium ratio was 24:1.

Polymerization

Solid VII (0.05 g) was dissolved in 100 ml of toluene, injected into a 250 ml pressure reaction vessel and heated to 80°C. The vessel was pressured to 2.4 bar (35 psi) with ethylene and maintained for 20 minutes at 80°C with stirring. 3.2 grams of high density polyethylene was isolated.

Example 8

Catalyst preparation

To a .25 liter reaction flask containing 1 gram of bis(cyclopentadienyl)titanium diphenyl dissolved in 100 ml of an 80:20 mixture of pentane and toluene there was added, with constant stirring and at room temperature, 95 ml of a pentane solution 0.79 M in methylalumoxane. A reaction occurred immediately forming an insoluble oil. The reaction vessel was cooled to -30°C and held at that temperature for one hour. The oil was separated from the mother liquor, washed in 50 ml of pentane and dried *in vacuo*, yielding 0.70 grams of a glassy solid (Solid VIII). The aluminum:titanium ratio was 17:1.

Polymerization

Solid VIII (0.05 g) was dissolved in 100 ml toluene, injected into a 250 ml pressure reaction vessel and heated to 80 °C. The vessel was pressured to 2.4 bar (35 psi) with ethylene and maintained for 20 minutes at 80 °C with constant stirring. 2.9 grams of high density polyethylene was isolated.

Example 9

Catalyst preparation

To a 0.25 liter reaction flask containing 0.5 grams of bis(cyclopentadienyl)zirconium dimethyl dissolved in 100 ml of a 90:10 mixture of pentane and toluene there was added, with constant stirring and at room temperature, 63 ml of a pentane solution 0.79 M in methylalumoxane. A reaction occurred immediately as evidenced by the formation of an off-white precipitate. The reaction vessel was cooled to -30 °C and held at that temperature for one hour. The precipitate was collected by filtration, washed with 50 ml of pentane and dried *in vacuo*, yielding 1.9 grams of a white solid (Solid IX). The aluminum:zirconium ratio was 21.7:1.

Polymerization

Solid IX (0.05 g) was dissolved in 100 ml of toluene, injected into a 250 ml pressure reaction vessel and heated to 80 °C. The vessel was pressured to 2.4 bar (35 psi) with ethylene and maintained for 10 minutes at 80 °C with constant stirring. 7.2 grams of high density polyethylene was isolated.

## Claims

**1.** A solid catalyst for use in a subsequent polymerisation step comprising a reaction product obtainable by contacting at least one metallocene of a transition metal of Group IV B. V B. VI B or VIII of the Periodic Table (66th Edition of Handbook of Chemistry and Physics. CRC press (1985-1986) CAS version) and alkyl-alumoxane at a temperature between -78 °C and 50 °C for 2 to 60 minutes, said reaction product having a molar ratio of aluminum to transition metal of from 12:1 to 100:1.

**2.** A catalyst in accordance with claim 1 wherein the metallocene is selected from titanium, zirconium, hafnium and vanadium metallocene and mixtures thereof.

**3.** A catalyst in accordance with claim 1 or claim 2 wherein the aluminum :transition metal ratio is from 12:1 to 40:1

**4.** A catalyst in accordance with any one of the preceding claims wherein the metallocene is represented by the formula

I) $(Cp)_mMR_nX_q$

(II) $(C_5R'_k)_gR''_s(C_5R'_k)MQ_{3-g}$

(III) $R''_s(C_5R'_k)_2MQ'$

wherein Cp is a cyclopentadienyl ring, M is a group IVB, VB, VIB, or VIII transition metal, R is hydrogen; a hydrocarbyl group or hydrocarboxy having from 1 to 20 carbon atoms, X is a halogen, m = 1-3, n = 0-3, q = 0-3 and the sum of m + n + q is equal to the oxidation state of M, $(C_5R'_k)$ is a cyclopentadienyl or a substituted cyclopentadienyl); each R' is the same or different and is hydrogen or a hydrocarbyl radical selected from alkyl, alkenyl, aryl, alkylaryl or arylalkyl radicals containing from 1 to 20 carbon atoms, or two carbon atoms are joined together to form a $C_4$-$C_6$ ring, R'' is a $C_1$-$C_4$ alkylene radical, a dialkylgermanium or silicon or an alkyl phosphine or amine radical bridging two $(C_5R'_k)$ rings; Q is a hydrocarbyl radical selected from aryl, alkyl, alkenyl, alkylaryl, or arylalkyl radicals having from 1-20 carbon atoms, hydrocarboxy radical having from 1-20 carbon atoms or halogen and can be the same or different from each other, Q' is an alkylidene radical having from 1 to 20 carbon atoms: s is 0 or 1, g is 0, 1 or 2; s in O when g is O, k is 4 when s is 1 and k is 5 when s is 0.

**5.** A catalyst in accordance with claim 4 wherein the metallocenes are selected from bis(cyclopentadienyl) zirconium dichloride, bis(cyclopentadienyl)zirconium methyl chloride, bis(cyclopentadienyl)zirconium dimethyl, bis(methylcyclopentadienyl)zirconium dichloride, bis(methylcyclopentadienyl)zirconium methyl chloride, bis(methylcyclopentadienyl)zirconium dimethyl, bis(pentamethylcyclopentadienyl)zirconium dichloride, bis (pentamethylcyclopentadienyl)zirconium methyl chloride, bis-(pentamethylcyclopentadienyl)zirconium dimethyl, bis(n-butylcyclopentadienyl)zirconium dichloride, bis-(n-butylcyclopentadienyl)zirconium methyl chloride, bis (n-butyl-cyclopentadienyl)zirconium dimethyl, bis(cyclopentadienyl)titanium diphenyl, bis(cyclopentadienyl)titanium dichloride, bis(cyclopentadienyl)-titanium chloride, bis(cyclopentadienyl)titanium dimethyl, bis(methylcyclopentadienyl)titanium diphenyl, bis(methylcyclopentadienyl)titanium methyl dichloride, bis (methylcyclopentadienyl)titanium diphenyl, bis(methylcyclopentadienyl)titanium methyl chloride, bis(methylcyclopentadienyl)titanium dimethyl, bis-(pentamethylcyclopentadienyl) titanium dichloride, bis(pentamethylcyclopentadienyl) titanium diphenyl; bis(pentamethylcyclopentadienyl) titanium methyl chloride, bis(pentamethylcylopentadienyl) titanium dimethyl, bis(n-butyl-cyclopentaienyl)titanium diphenyl, bis(n-butyl-cyclopentadienyl)titanium dichloride and mixtures thereof.

**6.** A method for preparing a solid olefin polymerisation catalyst comprising performing a reaction of (1) at least one metallocene of a transition metal of Group IV B, V B, VI B and VIII of the Periodic Table (66th edition of Handbook of Chemistry and Physics, CRC Pres (1985-86) (CAS version) in a solvent in an amount sufficient to dissolve the metallocene and (2) alkyl alumoxane in a solvent in an amount sufficient to dissolve the alumoxane, at a molar ratio of aluminium to transition metal of from 12:1 to 100:1 at a temperature between -78 ° C and 50 ° C for 2 to 60 minutes, such that an oil or precipitate is formed .

**7.** A process for the polymerization and copolymerization of olefins and in particular of ethylene or copolymers of ethylene and alpha-olefins or diolefins which process comprises polymerising the monomers in the presence of a catalyst prepared in a preceding reaction step, which catalyst is according to any one of claims 1 to 5 or prepared by the method of claim 6.

**8.** A process according to claim 7 wherein said catalyst is employed in an amount such as to provide from 0.00005-0.01 wt % of transition metal based on the polymerized product.

**9.** A process according to claim 7 or 8 wherein said catalyst is used without an organometallic cocatalyst.

## Patentansprüche

**1.** Fester Katalysator zur Verwendung in einem nachfolgenden Polymerisationsschritt, der ein Reaktionsprodukt umfaßt, welches erhältlich ist, indem man mindestens ein Metallocen eines Übergangsmetalls der Gruppe IVB, VB, VIB oder VIII des Periodensystems (66. Auflage des Handbook of Chemistry and Physics, CRC Press (1985-1986) CAS Version) und ein Alkylalumoxan 2 bis 60 Minuten lang bei einer Temperatur zwischen -78 ° C und 50 ° C in Kontakt bringt, wobei das Reaktionsprodukt ein Molverhältnis von Aluminium zu Übergangsmetal 12:1 bis 100:1 aufweist.

**2.** Katalysator nach Anspruch 1, bei dem das Metallocen aus Titan-, Zirconium-, Hafnium- und Vanadiummetallocenen und Mischungen derselben ausgewählt worden ist.

**3.** Katalysator nach Anspruch 1 oder 2, bei dem das Aluminium:Übergangsmetall-Verhältnis von 12:1 bis 40:1 beträgt.

**4.** Katalysator nach einem der vorhergehenden Ansprüche, bei dem das Metallocen durch die Formeln

(I) $(Cp)_mMR_nX_q$

(II) $(C_5R'_k)_gR''_s(C_5R'_k)MQ_{3-g}$

oder

(III) $R''_s(C_5R'_k)_2MQ'$

wiedergegeben wird, in denen Cp ein Cyclopentadienylring ist, M ein Übergangsmetall der Gruppe IVB, VB, VIB oder VIII ist, R Wasserstoff, eine Kohlenwasserstoffgruppe oder eine Kohlenwasserstoffoxygruppe mit 1 bis 20 Kohlenstoffatomen ist, X ein Halogen ist, m = 1-3, n = 0-3, q = 0-3 und die Summe von m + n + q gleich dem Oxidationszustand von M ist, ($C_5R'_k$) ein Cyclopentadienyl oder ein substituiertes Cyclopentadienyl ist; jedes R' gleich den übrigen oder von diesen verschieden ist und Wasserstoff oder ein Kohlenwasserstoffrest ausgewählt aus Alkyl-, Alkenyl-, Aryl-, Alkylaryl- oder Arylalkylresten, die 1 bis 20 Kohlenstoffatome enthalten, oder bei denen 2 Kohlenstoffatome unter Bildung eines $C_4$-bis $C_6$-Rings verbunden sind, ist, R'' ein $C_1$- bis $C_4$-Alkylenrest, ein Dialkylgermanium- oder -silicium- oder ein Alkyl-phosphin- oder -aminrest, welcher zwei ($C_5R'_k$)-Ringe verbrückt, ist; Q ein Kohlenwasserstoffrest, welcher aus Aryl-, Alkyl-, Alkenyl-, Alkylaryl-, oder Arylalkylresten mit 1 bis 20 Kohlenstoffatomen ausgewählt ist, ein Kohlenwasserstoffoxyrest mit 1 bis 20 Kohlenstoffatomen oder Halogen ist und gleich den übrigen oder von diesen verschieden sein kann, Q' ein Alkylidenrest mit 1 bis 20 Kohlenstoffatomen ist; s 0 oder 1 ist, g 0, 1 oder 2 ist; s 0 ist, wenn g 0 ist, k 4 ist, wenn s 1 ist und k 5 ist, wenn s 0 ist.

5. Katalysator nach Anspruch 4, bei dem die Metallocene ausgewählt sind aus Bis(cyclopentadienyl)-zirconiumdichlorid, Bis(cyclopentadienyl)zirconiummethylchlorid,Bis(cyclopentadienyl)-zirconiumdimethyl, Bis(methylcyclopentadienyl)zirconiumdichlorid, Bis(methylcyclopentadienyl)-zirconiummethylchlorid, Bis(methylcyclopentadienyl)zirconiumdimethyl, Bis-(pentamethylcyclopentadienyl)zirconiumdichlorid,Bis(pentamethylcyclopentadienyl)-zirconiummethylchlorid, Bis(pentamethylcyclopentadienyl)zirconiumdimethyl, Bis(n-butylcyclopentadienyl)zirconiumdichlorid, Bis(n-butylcyclopentadienyl)zirconiummethylchlorid,Bis(n-butylcyclopentadienyl)-zirconiumdimethyl, Bis(cyclopentadienyl)titandiphenyl, Bis(cyclopentadienyl)titandichlorid, Bis-(cyclopentadienyl)titanmethylchlorid, Bis(cyclopetadienyl)titandimethyl, Bis(methylcyclopentadienyl)-titandiphenyl,Bis(methylcyclopentadienyl)titandichlorid, Bis(methylcyclopentadienyl)titanmethylchlorid, Bis(methylcyclopentadienyl)titandimethyl, Bis(pentamethylcyclopentadienyl)titandichlorid, Bis-(pentamethylcyclopentadienyl)titandiphenyl, Bis(pentamethylcyclopentadienyl)titanmethylchlorid, Bis-(pentamethylcyclopentadienyl)titandimethyl, Bis(n-butylcyclopentadienyl)titandiphenyl, Bis(n-butylcyclopentadienyl)titandichlorid und Mischungen derselben.

6. Verfahren zur Herstellung eines festen Olefinpolymerisationskatalysators, bei dem man (1) mindestens ein Metallocen eines Übergangsmetalls der Gruppe IVB, VB, VIB und VIII des Periodensystems (66. Auflage des Handbook of Chemistry and Physics, CRC Press (1985-86) CAS Version) in einer zur Auflösung des Metallocens ausreichenden Menge eines Lösungsmittels und (2) ein Alkylalumoxan in einer zur Auflösung des Alumoxans ausreichenden Menge eines Lösungsmittels bei einem Molverhältnis von Aluminium zu Übergangsmetall von 12:1 bis 100:1 bei einer Temperatur zwischen -78 °C und 50 °C 2 bis 60 Minuten lang miteinander umsetzt, so daß ein Öl oder Niederschlag gebildet wird.

7. Verfahren zur Polymerisierung und Copolymerisierung von Olefinen und insbesondere von Ethylen oder zur Herstellung von Copolymeren aus Ethylen und $\alpha$-Olefinen oder Diolefinen, welches das Polymerisieren der Monomere in Gegenwart eines Katalysators, der in einem vorhergehenden Reaktionsschritt hergestellt wurde, umfaßt, wobei der Katalysator einem der Ansprüche 1 bis 5 entspricht oder durch das Verfahren nach Anspruch 6 hergestellt wurde.

8. Verfahren nach Anspruch 7, bei dem der Katalysator in einer solchen Menge eingesetzt wird, daß 0,00005-0,01 Gew.% Übergangsmetall, bezogen auf das polymerisierte Produkt, bereitgestellt wird.

9. Verfahren nach Anspruch 7 oder 8, bei dem der Katalysator ohne einen metallorganischen Cokatalysator verwendet wird.

**Revendications**

1. Catalyseur solide destiné à être utilisé dans une étape ultérieure de polymérisation, comprenant un produit de réaction pouvant être obtenu en mettant en contact au moins un métallocène d'un métal de transition des Groupes IVB, VB, VIB et VIII du Tableau Périodique (66ème édition du Handbook of Chemistry and Physics, CRC Press (1985-86) CAS version) et un alkyl-alumoxane à une température comprise entre -78 °C et 50 °C pendant 2 à 60 minutes, ledit produit de réaction ayant un rapport

molaire de l'aluminium au métal de transition compris dans l'intervalle de 12:1 à 100:1.

2. Catalyseur suivant la revendication 1, dans lequel le métallocène est choisi entre un métallocène à base de titane, un métallocène à base de zirconium, un métallocène à base d'hafnium et un métallocène à base de vanadium et leurs mélanges.

3. Catalyseur suivant la revendication 1 ou la revendication 2, dans lequel le rapport aluminium:métal de transition est compris dans l'intervalle de 12:1 à 40:1.

4. Catalyseur suivant l'une quelconque des revendications précédentes, dans lequel le métallocène est représenté par la formule

(I) $(Cp)_mMR_nX_q$

(II) $(C_5R'_k)_gR''_s(C_5R'_k)MQ_{3-g}$ ou (III) $R''_s(C_5R'_k)_2MQ'$

dans laquelle Cp représente un noyau cyclopentadiényle, M représente un métal de transition du Groupe IVB, VB, VIB ou VIII, R représente l'hydrogène, un groupe hydrocarbyle ou hydrocarboxy ayant 1 à 20 atomes de carbone, X représente un halogène et m a une valeur de 1 à 3, n a une valeur de 0 à 3, q a une valeur de 0 à 3 et la somme $m+n+q$ est égale à l'état d'oxydation de M, le groupe $(C_5R'_k)$ représente un groupe cyclopentadiényle ou cyclopentadiényle substitué ; chaque groupe R', identique ou différent, représente l'hydrogène ou un radical hydrocarbyle choisi entre des radicaux alkyle, alcényle, aryle, alkylaryle et arylalkyle contenant 1 à 20 atomes de carbone, ou bien deux atomes de carbone sont reliés l'un à l'autre pour former un noyau en $C_4$ à $C_6$, R'' représente un radical alkylène en $C_1$ à $C_4$, un radical dialkyl-germanium ou silicium ou bien un radical alkyl-phosphine ou amine assurant le pontage entre deux noyaux $(C_5R'_k)$ ; Q représente un radical hydrocarbyle choisi entre des radicaux aryle, alkyle, alcényle, alkylaryle et arylalkyle ayant 1 à 20 atomes de carbone, un radical hydrocarboxy ayant 1 à 20 atomes de carbone ou un halogène, ces radicaux Q pouvant être identiques ou différents les uns des autres ; Q' représente un radical alkylidène ayant 1 à 20 atomes de carbone ; s a la valeur 0 ou 1 ; g a la valeur 0, 1 ou 2 ; s a la valeur 0 lorsque g est égal à 0 ; k a la valeur 4 lorsque s est égal à 1 et k a la valeur 5 lorsque s est égal à 0.

5. Catalyseur suivant la revendication 4, dans lequel les métallocènes sont choisis entre le dichlorure de bis(cyclopentadiényl)zirconium, le méthyl-chlorure de bis(cyclopentadiényl)zirconium, le diméthyl-bis-(cyclopentadiényl)zirconium, le dichlorure de bis(méthylcyclopentadiényl)zirconium, le méthyl-chlorure de bis(méthylcyclopentadiényl)zirconium, le diméthyl-bis(méthylcyclopentadiényl)zirconium, le dichlorure de bis(pentaméthylcyclopentadiényl)zirconium, le chlorure de méthyl-bis-(pentaméthylcyclopentadiényl)zirconium, le diméthyl-bis(pentaméthylcyclopentadiényl)zirconium, le dichlorure de bis(n-butylcyclopentadiényl)zirconium, le chlorure de méthyl-bis(n-butylcyclopentadiényl)-zirconium, le diméthyl-bis(n-butylcyclopentadiényl)zirconium, le diphényl-bis(cyclopentadiényl)titane, le dichlorure de bis(cyclopentadiényl)titane, le chlorure de bis(cyclopentadiényl)titane, le diméthyl-bis-(cyclopentadiényl)titane, le diphényl-bis(méthylcyclopentadiényl)titane, le dichlorure de méthyl-bis-(méthylcyclopentadiényl)titane, le diphényl-bis(méthylcyclopentadiényl)titane, le chlorure de méthyl-bis-(méthylcyclopentadiényl)titane, le diméthyl-bis(méthylcyclopentadiényl)titane, le dichlorure de bis-(pentaméthylcyclopentadiényl)titane, le diphényl-bis (pentaméthylcyclopentadiényl)titane, le chlorure de méthyl-bis(pentaméthylcyclopentadiényl)titane, le diméthyl-bis(pentaméthylcyclopentadiényl)titane, le diphényl-bis(n-butylcyclopentadiényl)titane, le dichlorure de bis(n-butylcyclopentadiényl)titane et leurs mélanges.

6. Procédé de préparation d'un catalyseur solide de polymérisation d'oléfines, consistant à faire réagir (1) au moins un métallocène d'un métal de transition des Groupes IVB, VB, VIB et VIII du Tableau Périodique (66ème édition du Handbook of Chemistry and Physics, CRC Press (1985-86) CAS version) dans un solvant en une quantité suffisante pour dissoudre le métallocène et (2) un alkyl-alumoxane dans un solvant en une quantité suffisante pour dissoudre l'alumoxane, en un rapport molaire de l'aluminium au métal de transition compris dans l'intervalle de 12:1 à 100:1, à une température comprise entre -78 °C et 50 °C pendant 2 à 60 minutes de telle manière que l'on forme une huile ou un précipité.

7. Procédé de polymérisation et de copolymérisation d'oléfines et en particulier d'éthylène ou de copolymères d'éthylène et d'alpha-oléfines ou dioléfines, qui consiste à polymériser les monomères en présence d'un catalyseur préparé dans une étape réactionnelle précédente, catalyseur qui répond à l'une quelconque des revendications 1 à 5 ou bien est préparé par le procédé suivant la revendication 6.

8. Procédé suivant la revendication 7, dans lequel le catalyseur est utilisé en une quantité choisie de manière à fournir 0,00005 à 0,01% en poids de métal de transition, sur la base du produit polymérisé.

9. Procédé suivant la revendication 7 ou 8, dans lequel le catalyseur est utilisé sans cocatalyseur organo-métallique.